# EUROPEAN PATENT SPECIFICATION

(11) **EP 3 572 764 B1**
(45) Date of publication and mention of the grant of the patent: **03.06.2020**
(21) Application number: 19169608.7
(22) Date of filing: 16.04.2019
(51) Int. Cl.: G01B 5/012, G01B 11/00

(54) **SHAPE MEASURING PROBE**
FORMMESSSONDE
SONDE DE MESURE DE FORME

(30) Priority: 21.05.2018 JP 2018097063
(43) Date of publication of application: 27.11.2019
(73) Proprietor: Panasonic Intellectual Property Management Co., Ltd., Osaka-shi, Osaka 540-6207 (JP)
(72) Inventor: TANAKA, Hitoshi, Osaka, 540-6207 (JP); FUNABASHI, Takanori, Osaka, 540-6207 (JP); SASAKI, Wataru, Osaka, 540-6207 (JP)
(74) Representative: Vigand, Philippe

(56) References cited:
- CN-A- 107 152 912
- GB-A- 2 220 748
- JP-A- 2006 078 367
- US-A- 5 455 677
- US-A1- 2008 148 588

## Description

### BACKGROUND

### 1. Technical Field

The present disclosure relates to a contact type shape measuring probe of a three-dimensional shape measuring apparatus that obtains positional information of a surface to be measured, such as an optical component or a mold.

### 2. Description of the Related Art

Three-dimensional shape measuring machines are widely known as a method for measuring a surface shape having a non-spherical surface shape, such as an optical component or a mold, with high accuracy. In general, in the three-dimensional shape measuring machines having a contact type measuring probe, a measuring probe is moved along a surface of an object while bringing a distal end of the measuring probe into contact with the object, and the surface shape of the object is measured from the positional relationship of the measuring probe and a reference surface. One such measuring machine is a three-dimensional shape measuring machine utilizing a laser length measuring instrument and a reference flat face mirror.

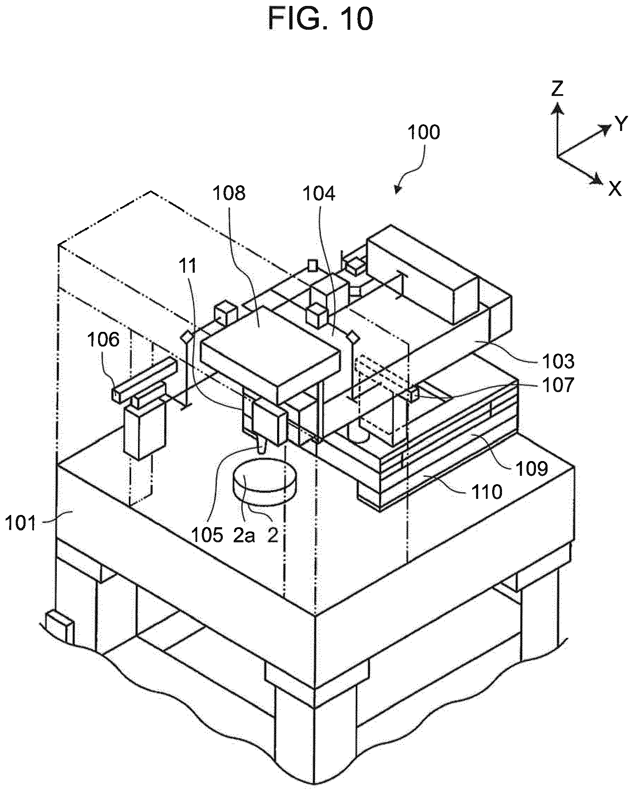

Here, a three-dimensional shape measuring machine of the related art will be described with reference to FIG. 10. FIG. 10 is a schematic configuration view of the three-dimensional shape measuring machine of the related art. In FIG. 10, object 2 (for example, a lens) is placed on surface plate 101. In addition, three-dimensional shape measuring machine 100 is configured such that, while bringing the distal end of measuring probe 105 attached to moving object 103 into contact with measuring surface 2a of object 2, the distal end of measuring probe 105 follows along measuring surface 2a and surface shape of object 2 is measured.

X-axis stage unit 109 and Y-axis stage unit 110 are provided on moving object 103 provided with measuring probe 105, and moving object 103 can move in an X-axis direction and in a Y-axis direction. Accordingly, moving object 103 can scan moving object 103 in the X-axis direction and in the Y-axis direction, following the surface shape of measuring surface 2a of object 2.

In addition, X reference mirror 106, Y reference mirror 107, and Z reference mirror 108 are disposed on surface plate 101 on which object 2 is placed via a reference mirror supporter. Furthermore, laser length measuring optical system 104 is installed in moving object 103. By measuring the length of the distance of measuring probe 105 with reference to the X, Y, and Z reference mirrors, respectively, by the optical interference method, the three-dimensional shape measuring machine can obtain positional information on X, Y, and Z coordinates of measuring probe 105 (for example, refer to Japanese Patent Unexamined Publication No. 6-265340).

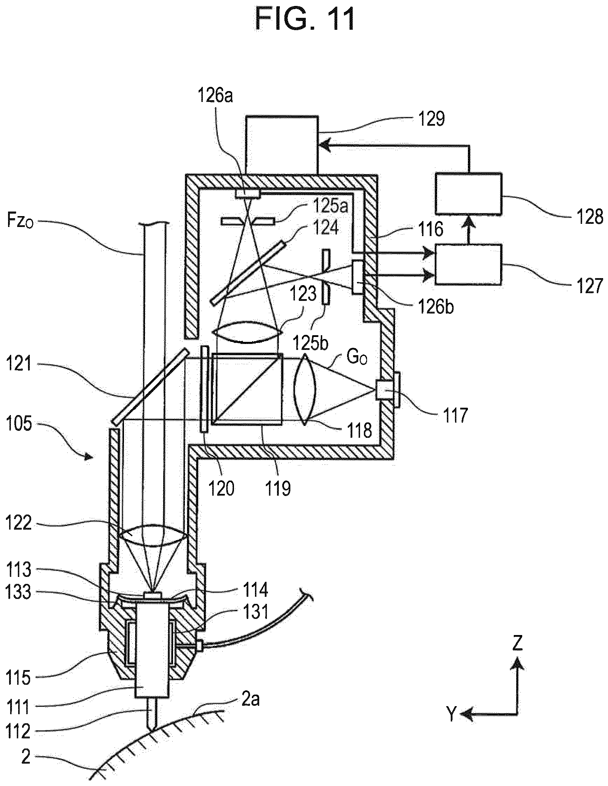

Next, auto focus control will be described with reference to a configuration example of FIG. 11 in a mechanical configuration, an auto focus optical system, and a control method. By the auto focus control, a probe position is controlled such that the distal end of measuring probe 105 is brought into contact with measuring surface 2a of object 2 with a substantially constant force.

First, the mechanical configuration will be described. Measuring probe 105 has a structure in which movable member 111 is inserted in air bearing 131 and is movable in a Z coordinate direction. Further, movable member 111 has stylus 112 installed at a lower end and reflection surface 113 installed at an upper end. Reflection surface 113 is irradiated with laser light Fzo, and the position of reflection surface 113 is measured from the reflected light.

An elastic material that elastically restricts the movement in a Z direction, and more specifically, leaf spring 114 is attached to movable member 111. Leaf spring 114 is disposed so as to extend to both sides of FIG. 11 with respect to the upper end of movable member 111. In addition, lower surfaces on both sides of leaf spring 114 are in contact with support point 133 of guide 115, and movable member 111 is configured such that support point 133 is suspended from the fulcrum via leaf spring 114. At the time of shape measurement, movable member 111 vertically follows measuring surface 2a in a state where movable member 111 is suspended by leaf spring 114. At this time, movable member 111 is restricted in the X and Y directions by air bearing 131 and is freely movable in the Z direction.

Next, the auto focus optical system will be described. Laser light Go emitted from semiconductor laser 117 passes through collimator lens 118 and passes through polarization beam splitter 119 and λ/4 wave plate 120. In addition, laser light Go is reflected by dichroic mirror 121 and is focused on reflection surface 113 at the upper end of movable member 111 by condenser lens 122.

Further, the reflected light reflected by reflection surface 113 passes through condenser lens 122, is reflected by dichroic mirror 121, is totally reflected by polarization beam splitter 119, and is collected by lens 123. In addition, the light is split into two by half mirror 124, passes through pinhole 125a and pinhole 125b, respectively, and is received by photodetector 126a and photodetector 126b, respectively.

Next, a control method of the auto focus control will be described. The detection outputs of two photodetector 126a and photodetector 126b are input into error signal generator 127. Error signal generator 127 outputs a focus error signal to servo circuit 128. Linear motor 129 is driven and controlled by servo circuit 128, and the position of probe main body 116 is focused to a position where a predetermined measuring force can be obtained.

Finally, a method of supporting movable member 141 with air bearing 144 will be described. Support point 133 in FIG. 11 is the only physical contact point in the vertical movement of movable member 111 in the Z direction. Therefore, a friction resistance at support point 133 becomes a large load factor in the fine vertical movement of movable member 111.

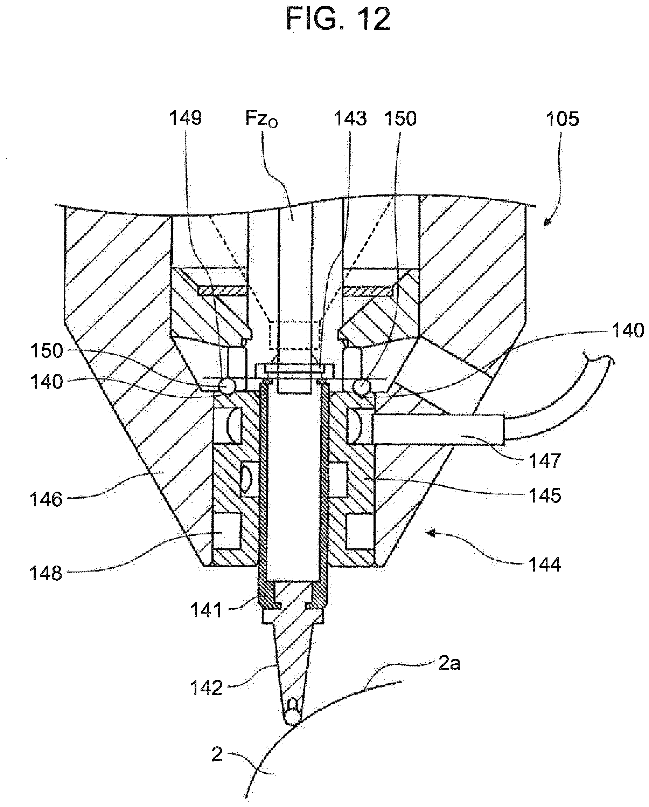

Here, as illustrated in FIG. 12, it is suggested to use two steel balls 150 for supporting movable member 141. According to such a configuration, the contact between support point 133 and elastic material 149 is point contact, and the frictional force between elastic material 149 and steel ball 150 in the vertical movement of movable member 141 can be suppressed to be small. As a result, it is possible to reduce the friction resistance against the vertical movement of movable member 141. As a method of fixing steel balls 150, there are, for example, a method in which V groove 140 is formed in the air bearing and steel ball 150 is set in V groove 140 and fixed with an adhesive or the like (refer to, for example, Japanese Patent Unexamined Publication No. 2006-78367). By setting steel ball 150 as support point 133, there is also an advantage that twisting or the like does not occur in the plate-like elastic material.

### SUMMARY

A shape measuring probe includes a movable member, a stylus, an air bearing, a first magnet, a second magnet, a first supporter, a second supporter, and an elastic material.

The rod-like movable member has a reflection surface for reflecting laser light at an upper end.

The stylus is provided at a lower end of the movable member and comes into contact with an object.

The air bearing that has a shaft hole, allows the movable member to penetrate the shaft hole, and supports the movable member to be movable in a first direction.

The first magnet and the second magnet are fixed to an upper end portion of the air bearing, and the first magnet and the second magnet are substantially symmetrical with respect to a shaft center of the movable member.

The spherical first supporter which is a magnetic body is connected to the first magnet with a magnetic force so as to be movable on the first magnet.

The spherical second supporter which is a magnetic body is connected to the second magnet with a magnetic force so as to be movable on the second magnet.

The plate-like elastic material adheres to the upper end portion of the movable member and is placed on the first supporter and the second supporter.

### BRIEF DESCRIPTION OF THE DRAWINGS

FIG. 1A is a perspective view illustrating a configuration of a three-dimensional shape measuring apparatus using a measuring probe according to First exemplary embodiment;
FIG. 1B is a schematic view of an auto focus optical system using the measuring probe according to First exemplary embodiment;
FIG. 2A is a sectional view of the measuring probe according to First exemplary embodiment of the disclosure;
FIG. 2B is an enlarged explanatory view near a steel ball of the measuring probe;
FIG. 3A is a schematic view of a movable member, an elastic material, and the steel ball until a movable member starts to move downward in a method of the related art;
FIG. 3B is a view illustrating a static frictional force generated between the elastic material and the steel ball in FIG. 3A;
FIG. 4A is a schematic view of the movable member, the elastic material, and the steel ball after the movable member starts to move downward in the method of the related art;
FIG. 4B is a view illustrating a static frictional force generated between the elastic material and the steel ball in FIG. 4A;
FIG. 5A is a schematic view of the movable member, the elastic material, and the steel ball until the movable member starts to move upward in the method of the related art;
FIG. 5B is a view illustrating a static frictional force generated between the elastic material and the steel ball in FIG. 5A;
FIG. 6A is a schematic view of the movable member, the elastic material, and the steel ball after the movable member starts to move upward in the method of the related art;
FIG. 6B is a view illustrating a static frictional force generated between the elastic material and the steel ball in FIG. 6A;
FIG. 7A is a schematic view of the operation of the elastic material and the steel ball when the movable member moves downward according to First exemplary embodiment;
FIG. 7B is a schematic view of the operation of the elastic material and the steel ball when the movable member moves upward according to First exemplary embodiment;
FIG. 8 is a sectional view of a measuring probe according to Second exemplary embodiment;
FIG. 9 is a sectional view of a measuring probe according to Third exemplary embodiment;
FIG. 10 is a perspective view illustrating a configuration of a three-dimensional shape measuring machine using a measuring probe of the related art;
FIG. 11 is a schematic view of an auto focus optical system of the related art; and
FIG. 12 is a sectional view of the measuring probe of the related art.

### DETAILED DESCRIPTIONS

In a configuration of the related art, since leaf spring 114 attached to movable member 111 is supported by steel balls 150 at points, the friction resistance can be reduced. However, when movable member 111 vertically moves up and down several nanometers to several micrometers, the friction resistor is generated between leaf spring 114 and support point 133. This becomes a load for the vertical movement of movable member 111 and becomes an instability factor in control for bringing a distal end of a stylus and an object into contact with each other with a constant force.

Hereinafter, embodiments of the disclosure will be described in detail with reference to the drawings.

### (First Exemplary Embodiment)

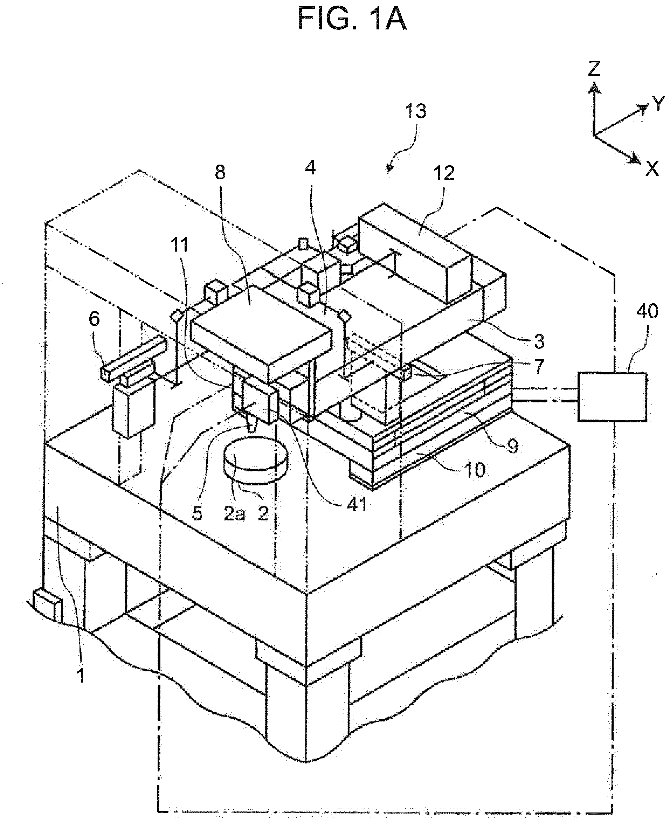

FIG. 1A is a perspective view illustrating a configuration of a three-dimensional shape measuring apparatus using a measuring probe according to first exemplary embodiment.

Compared to a three-dimensional shape measuring apparatus of the related art illustrated in FIG. 10, three-dimensional shape measuring apparatus 13 using measuring probe 5 according to first exemplary embodiment has a configuration largely different in the vicinity of two spherical supporters.

The outline of measuring probe 5 operation at the time of measurement is described hereinafter. Measuring probe 5 can move relatively in an XY-axis direction in a state where the distal end of measuring probe 5 is brought into contact with measuring surface 2a of object 2 placed on surface plate 1. In addition to the movement of measuring probe 5 in the XY-axis direction, the distal end of measuring probe 5 measures the shape of measuring surface 2a of object 2 by following measuring surface 2a of object 2 while keeping the contact force substantially constant.

Three-dimensional shape measuring apparatus 13 allows the distal end of measuring probe 5 attached to moving object 3 to follow measuring surface 2a of object 2 fixed to surface plate 1, measures the positional information of each point of object 2, and accordingly, the shape of object 2 is measured. As a method of measuring the positional information, X reference mirror 6, Y reference mirror 7, and Z reference mirror 8 are respectively disposed on surface base 1 via a reference mirror supporter, and the coordinate position of XYZ is obtained by laser length measuring optical system 4 by an optical interference method in which each of the reference mirrors is set as reference surfaces.

Moving object 3 provided with measuring probe 5 is provided with X-axis stage unit 9 and a Y-axis stage unit 10, and moving object 3 is moved respectively in the X-axis direction and in the Y-axis direction allowing measuring probe 5 to follow the surface shape of measuring surface 2a of object 2.

In addition, Z-axis stage unit 11 is supported so as to be movable in the Z-axis direction, that is, in an up-down direction (vertical direction) on surface plate 1, supports measuring probe 5 brought into contact with measuring surface 2a of object 2 at the lower end, and can vertically move measuring probe 5.

Controller 40 is connected to auto focus optical system 41, X-axis stage unit 9, Y-axis stage unit 10, Z-axis stage unit 11, He-Ne laser 12 and the like, performs respective operation controls, and accordingly, controls a three-dimensional shape measurement operation.

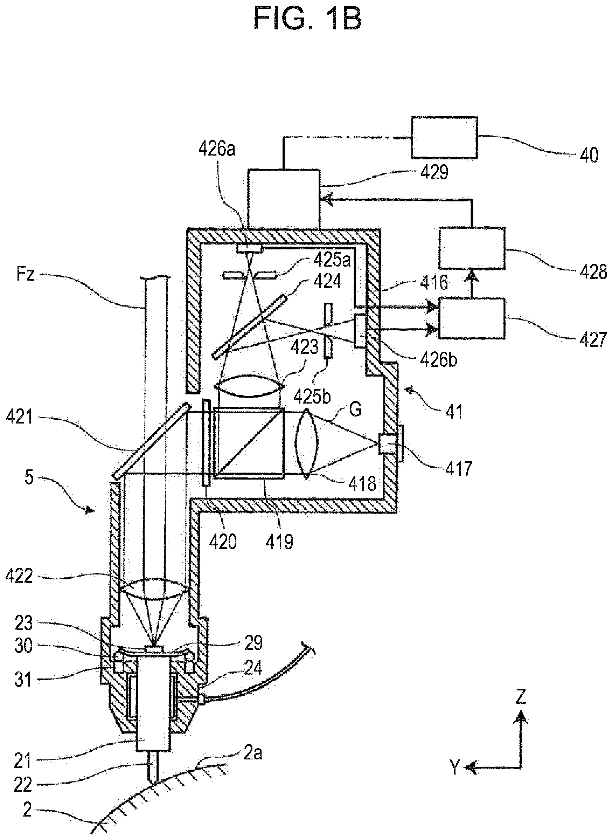

Here, the auto focus control for controlling a probe position such that the distal end of measuring probe 5 is brought into contact with measuring surface 2a of object 2 with a substantially constant force will be described with reference to a configuration example of FIG. 1B by dividing the description into a mechanical configuration, auto focus optical system 41, and a control method.

Measuring probe 5 has a structure in which movable member 21 penetrates and is inserted into air bearing 24 and is movable in the Z coordinate direction. Further, movable member 21 has stylus 22 installed at a lower end and reflection surface 23 installed at an upper end. Reflection surface 23 is irradiated with laser light Fz, and the position of reflection surface 23 is measured from the reflected light on reflection surface 23.

Elastic material 29 that elastically restricts the movement in the Z direction, and more specifically, a leaf spring is attached to movable member 21. Elastic material 29 is disposed so as to extend to both sides of the upper end of movable member 21 in FIG. 1B, and is suspended and supported with respect to air bearing 24 as will be described later.

At the time of shape measurement, movable member 21 vertically follows measuring surface 2a in a state where movable member 21 is suspended from air bearing 24 by elastic material 29. At this time, the movement of movable member 21 is restricted in the X and Y directions by air bearing 24 and is freely movable in the Z direction.

Next, auto focus optical system 41 will be described. Laser light G emitted from semiconductor laser 417 passes through collimator lens 418 and passes through polarization beam splitter 419 and λ/4 wave plate 420. In addition, laser light G is reflected by dichroic mirror 421 and is focused on reflection surface 23 at the upper end of movable member 21 by condenser lens 422.

Further, the reflected light reflected by reflection surface 23 passes through condenser lens 422, is reflected by dichroic mirror 421, is totally reflected by polarization beam splitter 419, and is collected by lens 423. In addition, the light is split into two by half mirror 424, passes through pinhole 425a and pinhole 425b, respectively, and is received by photodetector 426a and photodetector 426b, respectively.

Next, a control method of the auto focus control will be described. The detection outputs of two photodetector 426a and photodetector 426b are input into error signal generator 427. Error signal generator 427 outputs a focus error signal to servo circuit 428. Linear motor 429 is driven and controlled by servo circuit 428, and the position of probe main body 416 is focused to a position where a predetermined measuring force can be obtained.

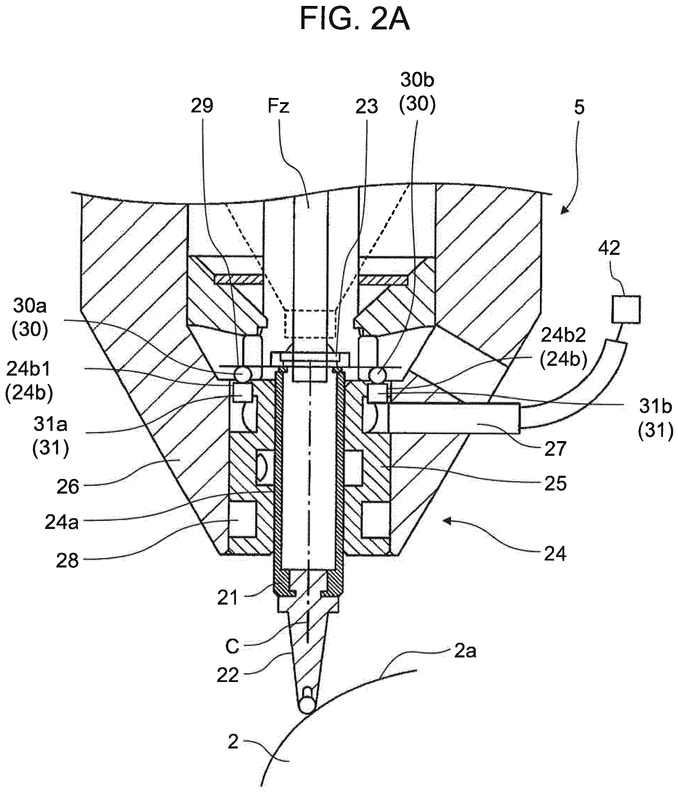

FIG. 2A is an enlarged sectional view of the distal end of measuring probe 5 according to first exemplary embodiment.

Measurement probe 5 includes at least stylus 22, rod-like movable member 21, air bearing 24, two magnets 31 (first magnet 31a and second magnet 31b), two spherical supporters (first supporter 30a and second supporter 30b), that is, an elastic material supporter, and plate-like elastic material 29.

Stylus 22 is provided at the lower end of measuring probe 5 and comes into contact with measuring surface 2a of object 2.

Movable member 21 includes reflection surface 23 that reflects laser light Fz from laser length measuring optical system 4 at the upper end.

Air bearing 24 inserts and supports movable member 21 so as to be movable only in the axial direction (first direction), that is, in the Z direction.

Two magnets 31 are fixed to the upper end portion of air bearing 24, substantially symmetrically with respect to shaft center C of movable member 21.

An example of two spherical elastic material supporters is a metal ball, and more specifically, steel ball 30. Two steel balls 30 are placed on the upper end surface which is a flat surface of the two magnets 31 and are movably connected to each other with a magnetic force.

Elastic material 29 adheres to the upper end portion of movable member 21, and extends to two spherical steel balls 30 to be placed and support the steel balls. In other words, elastic material 29 adheres to the upper end portion of movable member 21 and is placed on two steel balls 30 (first supporter 30a and second supporter 30b).

As described above, movable member 21 in measuring probe 5 includes stylus 22 which comes into contact with measuring surface 2a of object 2 installed at the lower end. In addition, reflection surface 23 is installed at the upper end of movable member 21. In order to measure the length by an optical interference method, laser light Fz is irradiated from laser length measuring optical system 4 to reflection surface 23. Further, movable member 21 is held in a state of being inserted into shaft hole 24a of air bearing 24, and is movable only in the axial direction thereof. Air bearing 24 supports movable member 21 that serves as a shaft in a state of being inserted into shaft hole 24a. In addition, air bearing 24 includes tubular air bearing main body 25 provided with an air passage for guiding and blowing the air to movable member 21 inserted into the shaft hole 24a, and an outer wall attached to or coupled to another component. In the embodiment, the outer wall of air bearing 24 is formed by housing 26 of measuring probe 5.

Housing 26 is a cylindrical container provided at the distal end of the measuring probe 5, and holds the air bearing 24 at the distal end. Housing 26 is provided with air coupling 27 for feeding the air to the air bearing main body 25, and the compressed air is blown from compressor 42 or the like. Groove 28 is formed on the surface of air bearing main body 25, and a space in groove 28 defined by a side wall of housing 26 and an inner wall surface of groove 28 is formed as a path for flowing the air.

With this configuration, during the XY movement in the measurement, the movement of movable member 21 is restricted in the X and Y directions within air bearing 24, and is movable only in the Z direction.

In addition to reflection surface 23, plate-like elastic material 29 is fixed to the upper end of movable member 21 in the vicinity of shaft center C of movable member 21. Elastic material 29 is disposed so as to be in a direction perpendicular to movable member 21. A specific example of elastic material 29 is a leaf spring. When movable member 21 penetrates shaft hole 24a of air bearing main body 25, both end portions of elastic material 29 are placed so as to come into contact with two steel balls 30 positioned on the upper surface of the air bearing main body 25. In other words, movable member 21 is supported by two steel balls 30 at both ends via elastic material 29, and is in a state of being suspended on the inside of air bearing 24.

Next, the operation of measuring probe 5 in the Z direction when stylus 22 attached to the distal end of measuring probe 5 relatively moves in the X and Y directions while being in contact with measuring surface 2a will be described.

Movable member 21 including stylus 22 installed at the lower end is irradiated with laser light Fz from laser length measuring optical system 4 on reflection surface 23 installed at the upper end. A configuration in which the position of reflection surface 23 is measured from the reflected light of laser light Fz is achieved. In addition, besides laser light Fz, reflection surface 23 is irradiated with laser light G from auto focus optical system 41. The relative position of reflection surface 23 within measuring probe 5 is detected from the reflected light of laser light G, and Z-axis stage unit 11 is controlled in the Z-axis direction such that reflection surface 23 becomes relatively constant at the position in the Z-axis direction within measuring probe 5 by the auto focus control. In addition, the position where reflection surface 23 within measuring probe 5 becomes relatively constant at the position in the Z-axis direction is set to a position where the distal end of stylus 22 comes into contact with measuring surface 2a and elastic material 29 is supported and suspended by two steel balls 30.

Accordingly, it is possible to maintain the positional relationship in which stylus 22 installed to measuring probe 5 is brought into contact with measuring surface 2a with a substantially constant minute force. Here, the minute force is, for example, several mgf to several tens mgf.

In this manner, while performing the auto focus control for keeping the position of reflection surface 23 constant in measuring probe 5, Z-axis stage unit 11 including measuring probe 5 relatively moves in the X and Y directions with respect to measuring surface 2a of object 2 by X-axis stage unit 9 and the Y-axis stage unit 10. In such a case, even when movable member 21 vertically fluctuates along the change in unevenness of the shape of measuring surface 2a, and even in the middle of the movement in the X and Y directions as Z-axis stage unit 11 follows the vertical fluctuation, measuring probe 5 can continue to be in contact with measuring surface 2a of object 2 with a constant force.

However, similar to the method of the related art illustrated in FIG. 12, when steel ball 150 that supports movable member 141 is fixed, and when elastic material 149 vertically bends in accordance with the vertical movement of movable member 141, the position of the contact point between elastic material 149 and steel ball 150 is deviated. Therefore, a minute frictional force is generated in elastic material 149 and steel ball 150. In addition, the frictional force serves as a friction resistance against the vertical movement of movable member 141. This will be described in detail hereinafter.

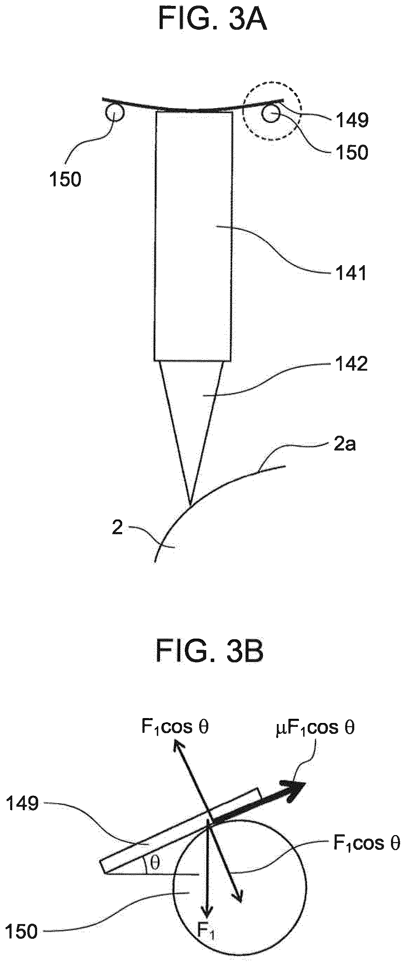

FIG. 3A illustrates movable member 141, elastic material 149, and steel ball 150 until immediately before movable member 141 starts moving from a stationary state downward. FIG. 3B illustrates an enlarged view of the vicinity of the contact point between elastic material 149 and steel ball 150 when movable member 141 is stationary.

With reference to FIG. 3B, the frictional force generated between elastic material 149 and steel ball 150 until movable member 141 starts moving from the stationary state downward will be described. When an inclination angle of elastic material 149 with respect to a horizontal direction is θ, elastic material 149 gives force F₁ in the vertical direction to steel ball 150, and thus, a drag which acts as a part of a force component of force F₁ and is given to elastic material 149 by steel ball 150 is F₁COSθ. Here, since the static friction is generated between elastic material 149 and steel ball 150, when the coefficient of static friction is µ, the frictional force generated between elastic material 149 and steel ball 150 is µF₁COSθ.

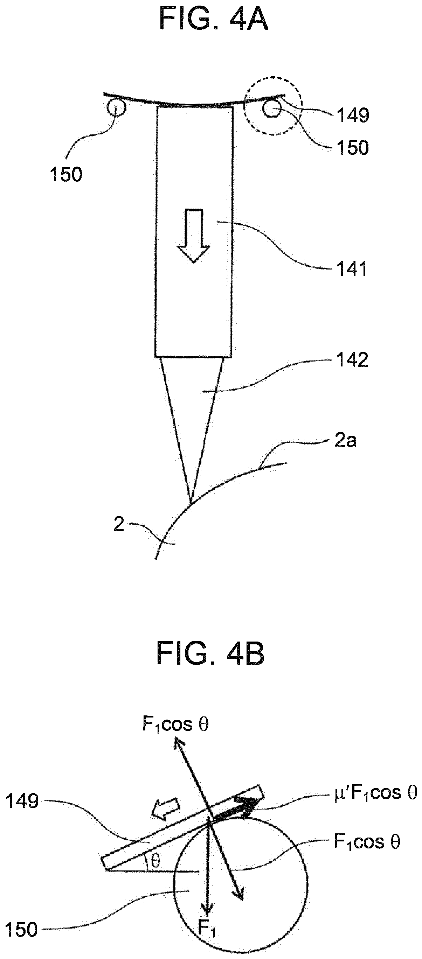

Next, FIG. 4A illustrates movable member 141, elastic material 149, and steel ball 150 when movable member 141 starts moving downward. FIG. 4B illustrates an enlarged view of the vicinity of the contact point between elastic material 149 and steel ball 150 when movable member 141 starts moving.

With reference to FIG. 4B, the frictional force generated between elastic material 149 and steel ball 150 when movable member 141 starts moving downward will be described. Since force F₁ acts in the vertical direction from elastic material 149 to steel ball 150 similar to the stationary state, the drag given to elastic material 149 by steel ball 150 is F₁COSθ. Here, since movable member 141 starts moving downward and the frictional force generated between elastic material 149 and steel ball 150 is dynamic friction, when the dynamic friction coefficient is µ', the frictional force is µ'F₁COSθ.

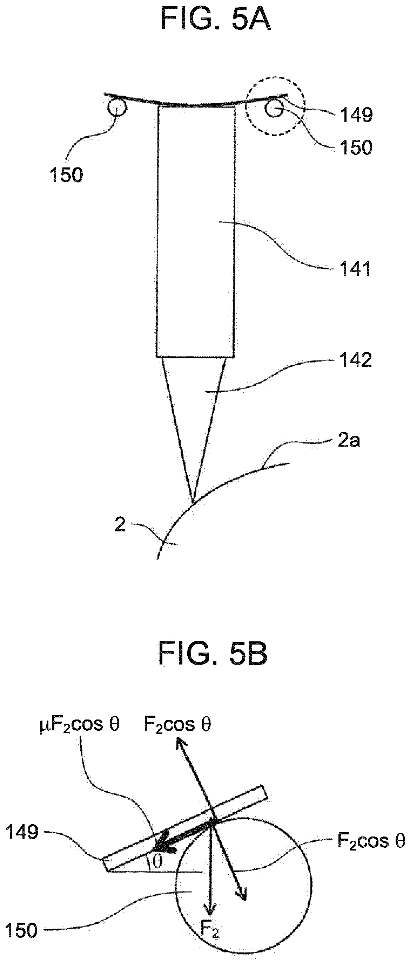

Next, FIG. 5A illustrates movable member 141, elastic material 149, and steel ball 150 until immediately before movable member 141 starts moving upward from the stationary state. FIG. 5B illustrates an enlarged view of the vicinity of the contact point between elastic material 149 and steel ball 150 when movable member 141 is stationary.

With reference to FIG. 5B, the frictional force generated between elastic material 149 and steel ball 150 until movable member 141 starts moving from the stationary state upward will be described. Since force F₂ acts in the vertical direction from elastic material 149 to steel ball 150, the drag given to elastic material 149 by steel ball 150 is F₂COSθ. Here, since the static friction generated between elastic material 149 and steel ball 150 is static friction, when the coefficient of static friction is µ, the frictional force generated between elastic material 149 and steel ball 150 is µF₂COSθ.

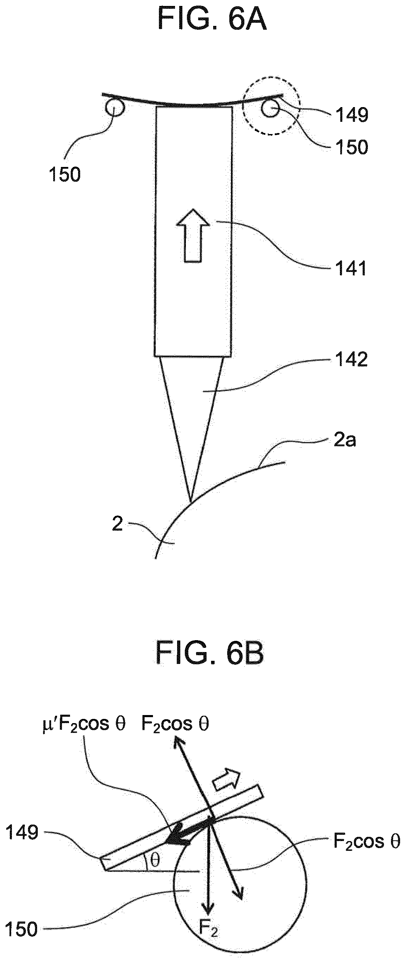

Next, FIG. 6A illustrates movable member 141, elastic material 149, and steel ball 150 when movable member 141 starts moving upward, and FIG. 6B illustrates an enlarged view of the vicinity of the contact point between elastic material 149 and steel ball 150 when movable member 141 starts moving.

With reference to FIG. 6B, the frictional force generated between elastic material 149 and steel ball 150 when movable member 141 starts moving upward will be described. Since force F₂ acts in the vertical direction from elastic material 149 to steel ball 150 similar to the stationary state, the drag given to elastic material 149 by steel ball 150 is F₂COSθ. Here, since movable member 141 starts moving upward and the frictional force generated between elastic material 149 and steel ball 150 is dynamic friction, when the dynamic friction coefficient is µ', the frictional force generated between elastic material 149 and the steel ball 150 is µ'F₂COSθ. In other words, in the auto focus control, when movable member 141 keeps a constant position, movable member 141 repeatedly vertically moves, but every time the vertical moving direction of movable member 141 changes, a resistance that nonlinearly changes from the static frictional force µF₁COSθ or µF₂COSθ to the dynamic frictional force µ'F₁COSθ or µ'F₂COSθ is generated to movable member 141. In addition, regarding F₁ and F₂ which are given to steel ball 150 by elastic material 149 in a case where movable member 141 moves in the up-down direction, the force F₁ is greater than force F₂. Therefore, the magnitude of the frictional force is different between the upward movement and the downward movement of movable member 141.

In this manner, since the friction resistance is generated against the vertical movement of movable member 141, the friction resistance thereof changes nonlinearly, and the magnitudes of the frictional forces differ in the up-down direction, the followability with respect to the shape of measuring surface 2a of object 2 of movable member 141 deteriorates due to the auto focus control.

Here, in the embodiment, the deviation between elastic material 29 and two steel balls 30 is prevented from occurring with respect to the bending of elastic material 29 with respect to the vertical motion of movable member 21. In other words, a support structure of two steel balls 30 with respect to air bearing 24 is not a simple fixed structure with a V groove, but a support structure that allows the movement with respect to air bearing 24.

Specifically, each steel ball 30 is configured to be capable of moving back and forth in a radial direction from shaft center C of movable member 21 in accordance with the bending of elastic material 29.

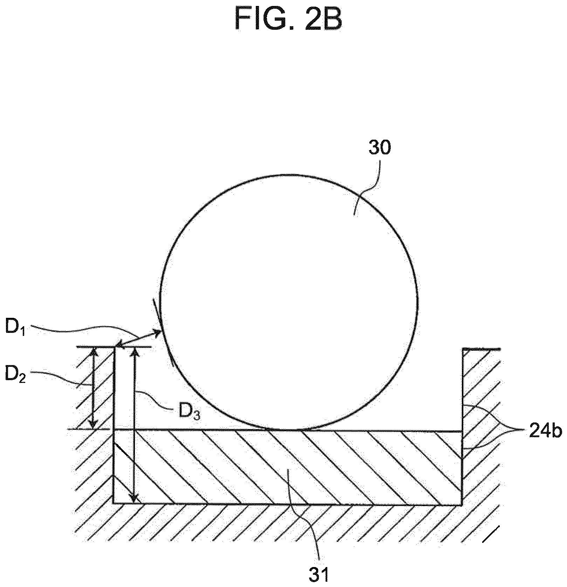

Next, a configuration in which respective steel balls 30 can move back and forth in the radial direction from the shaft center direction of movable member 21 will be described in detail hereinafter. In other words, as illustrated in FIG. 2A, two magnets 31 are fixed to air bearing 24 at approximately symmetrical positions with respect to shaft center C, for example, at an interval of 180 degrees. In addition, steel balls 30 are installed respectively on the upper end surfaces of two magnets 31, and air bearing 24 and steel ball 30 are movably connected to each other with the magnetic force of magnet 31. As a fixing method of magnet 31 to air bearing 24, there is a method of fixing by using an adhesive or the like. Specifically, two recesses 24b (first recess 24b1 and second recess 24b2) are formed in air bearing 24 at intervals of 180 degrees with respect to shaft center C. Magnet 31 is fixed in each of recesses 24b with an adhesive. Here, magnet 31 has a flat surface at least on the upper end surface, and has, for example, a columnar shape. Next, steel balls 30 are placed on the upper end surfaces of each of magnets 31, and steel ball 30 is movably held with the magnetic force of magnet 31. Finally, elastic material 29 is placed on each of steel balls 30. As illustrated in FIG. 2B, a remaining dimension D₂ in depth D₃ of recess 24b excluding the thickness of magnet 31 is, as an example, a dimension to the extent that magnet 31 is accommodated in recess 24b and is accommodated up to nearly half of steel ball 30. In this manner, it is possible to stably hold magnet 31 and steel ball 30 in air bearing 24.

In addition, the substantially symmetrical position with respect to shaft center C is not limited to the two positions spaced apart by 180 degrees but may be three positions with an interval of 120 degrees, for example.

Here, recess 24b has a function of preventing steel ball 30 from rolling and being disengaged from magnet 31. In order to achieve the function, it is necessary for the diameter of steel ball 30 not to come into contact with an opening edge of recess 24b even when steel ball 30 moves slightly on magnet 31 during the measurement. As a specific example, when steel ball 30 has a diameter of 1 mm, the rolling distance of steel ball 30 is at most several tens of µm. Further, it is considered that the machining error of magnet 31 and recess 24b is approximately 100 µm at maximum. When the diameter of magnet 31 is made smaller by 100 µm and the diameter of recess 24b is made larger by 100 µm, the center of magnet 31 will deviate only by 100 µm from the center of recess 24b. Therefore, even when steel ball 30 rolls several tens of micrometers on magnet 31 during the measurement, in order that steel ball 30 does not come into contact with the opening edge of recess 24b, as illustrated in FIG. 2B, it is necessary that clearance distance D₁ between the opening edge of recess 24b and steel ball 30 is approximately (100 µm) + (several tens µm) = (hundreds of ten µm) in the diameter of recess 24b.

Further, as described above, it is necessary that steel ball 30 may roll on magnet 31 and may be removed from magnet 31. Therefore, as a specific example of remaining dimension D₂ in depth D₃ of recess 24b excluding the thickness of magnet 31, a case where the diameter of steel ball 30 is 2/3 or more and 1/2 or less is preferable.

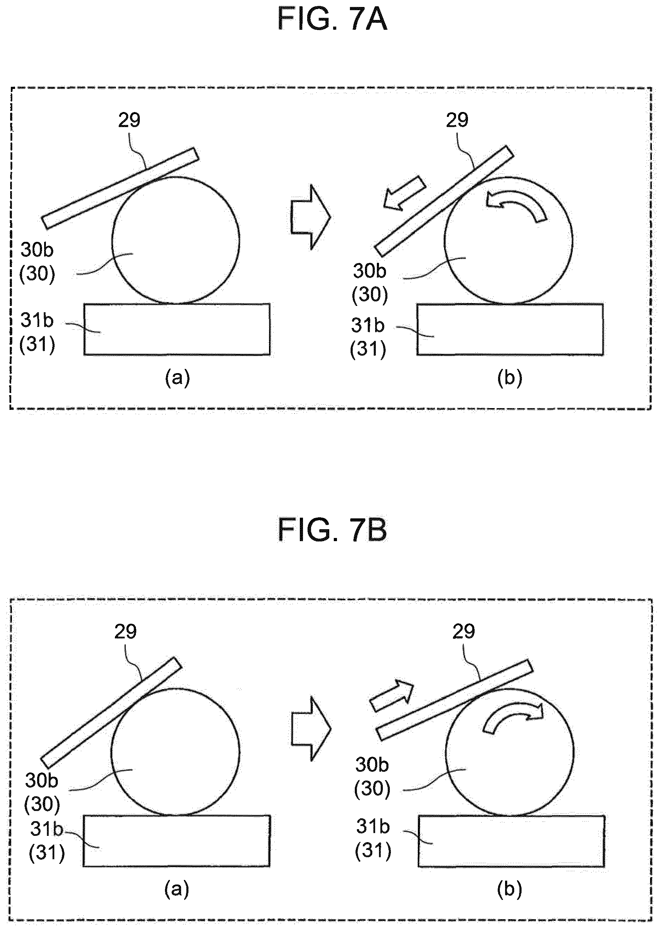

FIGS. 7A and 7B illustrate a state of elastic material 29 and steel ball 30 when movable member 21 vertically moves when steel ball 30 and air bearing 24 are connected to each other by magnet 31.

As illustrated in FIG. 7A, in a case where movable member 21 moves in the -Z direction (that is, downward) along the shape of measuring surface 2a, elastic material 29 is bent downward in a downward direction, and in accordance with the bending, steel ball 30 also rolls on the upper end surface of corresponding magnet 31 in the direction of shaft center C of movable member 21 (FIG. 7A(b)). In addition, when movable member 21 moves in the -Z direction, Z-axis stage unit 11 moves in the -Z direction and the distance between reflection surface 23 and auto focus optical system 41 is controlled so as to return to a predetermined position. In other words, when movable member 21 returns to the predetermined position, the bending of elastic material 29 returns to the original position, and thus, in accordance with this, each of steel balls 30 rolls on the upper end surfaces of corresponding magnet 31 and returns in a direction opposite to shaft center C of movable member 21.

Next, as illustrated in FIG. 7B, in a case where movable member 21 moves in the +Z direction (that is, upward), elastic material 29 is bent upward, and in accordance with the bending, steel ball 30 also rolls on the upper end surface of corresponding magnet 31 to the opposite side in the direction of shaft center C of movable member 21 (FIG. 7B(b)). In addition, when movable member 21 moves in the +Z direction, the distance between reflection surface 23 and auto focus optical system 41 becomes shorter, and thus, Z-axis stage unit 11 moves in the +Z direction and the distance between reflection surface 23 and auto focus optical system 41 is controlled so as to return to a predetermined position. In other words, when movable member 21 returns to the predetermined position, the bending of elastic material 29 returns to the original position, and thus, in accordance with this, each of steel balls 30 rolls on upper end surfaces of corresponding magnet 31 and returns toward the shaft center direction of movable member 21.

The friction resistance is generated between steel ball 150 that supports elastic material 149 and elastic material 149 in the related art against the bending of elastic material 29 due to the vertical movement of movable member 21. However, according to the embodiment, each of steel balls 30 rolls on the upper end surfaces of each of magnets 31 in accordance with the bending of elastic material 29, and accordingly, the friction resistance can be reduced. As a result, the followability of the auto focus control is improved, and the contact force between measuring surface 2a of object 2 and stylus 22 during the measurement is constant.

In other words, two steel balls 30 are respectively connected to each other with a magnetic force so as to be movable on two magnets 31, and plate-shaped elastic material 29 that adheres to the upper end portion of movable member 21 is placed on two steel balls 30, suspended, and supported. Accordingly, when elastic material 29 bends in accordance with the vertical movement of movable member 21, the deviation of elastic material 29 on the contact surface of steel ball 30 is eliminated, the friction resistance is reduced, and accordingly, the followability of the auto focus control which is the position control of movable member 21 is improved. With this configuration, in three-dimensional shape measuring apparatus 13 which performs the measurement by bringing the distal end of measuring probe 5 into contact with measuring surface 2a of object 2, it is possible to maintain the force given to measuring surface 2a by the distal end of measuring probe 5 to be more constant than that in the related art. Furthermore, since the force is kept constant, the distal end of measuring probe 5 can come into contact with measuring surface 2a with a smaller force.

Furthermore, as described above, since the follow ability of the auto focus control is improved and the contact force becomes more constant compared to the method in the related art, even when the contact force itself is set even smaller, the following in the auto focus control becomes possible.

In addition, there are properties that the magnetic force of magnet 31 is strongest in the vicinity of the center, and the magnetic force is weakened toward the outside. Therefore, in a normal state, steel ball 30 is held at the center of magnet 31. Therefore, in a case where measuring probe 5 is detached or in a case where impact is applied to measuring probe 5 itself, steel ball 30 can be restored to a predetermined position on the upper end surface of magnet 31.

### (Second Exemplary Embodiment)

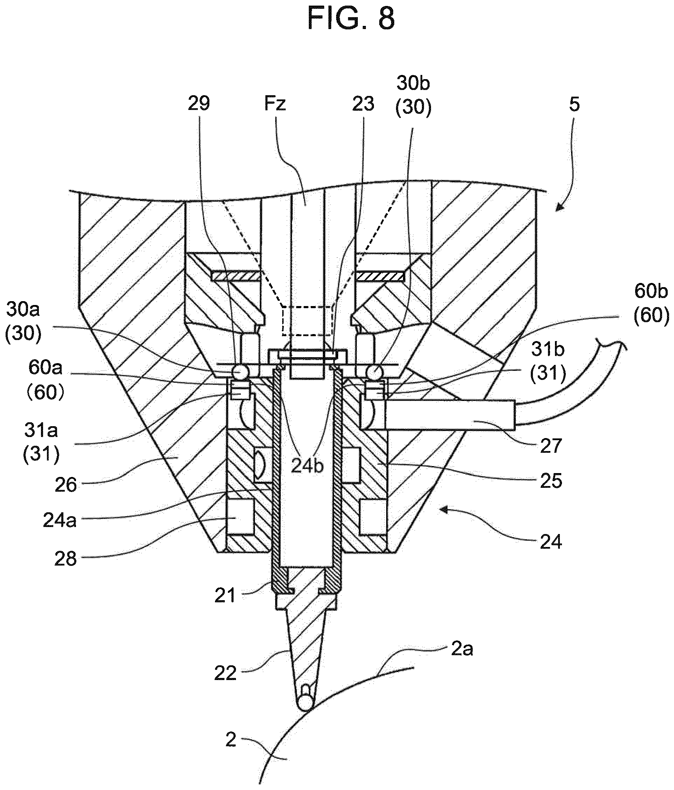

Next, a second exemplary embodiment of the disclosure will be described with reference to FIG. 8. Since measuring probe 5 of the second exemplary embodiment has substantially the same configuration as that of measuring probe 5 of the first exemplary embodiment, the difference will be mainly described.

Similarly to the first exemplary embodiment, two steel balls 30 are disposed in air bearing 24 at substantially symmetrical positions from shaft center C of movable member 21, and magnet 31 is fixed to air bearing 24 below steel ball 30. However, unlike the first exemplary embodiment, in the second exemplary embodiment, between steel ball 30 and magnet 31, a surface accuracy of the contact surface with steel ball 30 is high (for example, surface roughness of Ra 6.3 or more), magnetic body 60 (for example, SUS and the like) is disposed. In other words, first magnetic body 60a is disposed between first supporter 30a and first magnet 31a. In addition, second magnetic body 60b is disposed between second supporter 30b and second magnet 31b. Since magnet 31 has a property of being brittle in terms of material, it is difficult to increase the surface accuracy by polishing or the like. Therefore, by inserting magnetic body 60, such as SUS which is easy to be polished between magnet 31 and steel ball 30, it is possible to improve the rolling of steel ball 30 after maintaining the magnetic force. Further, according to the method, since steel ball 30 does not roll directly on magnet 31, an effect of preventing abrasion of magnet 31 is also obtained.

### (Third Exemplary Embodiment)

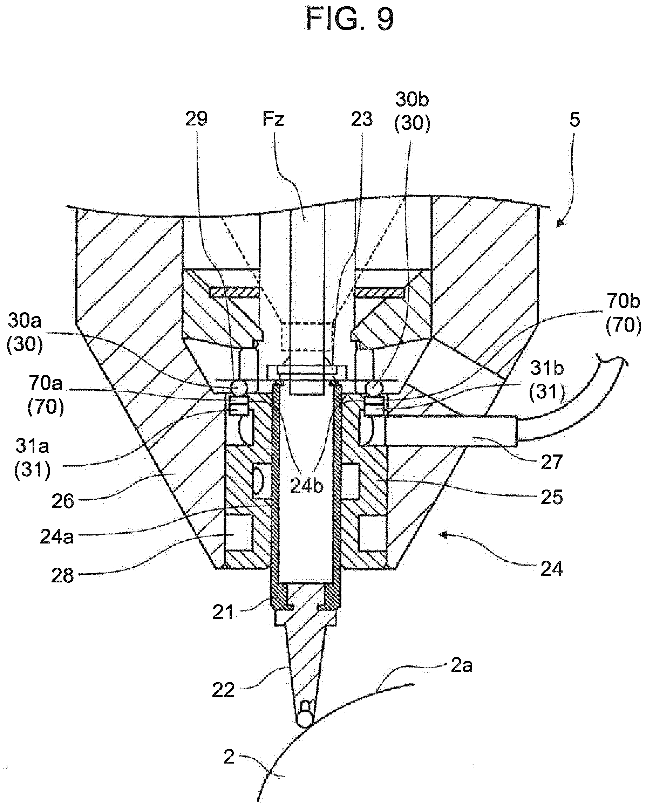

Next, a third exemplary embodiment of the disclosure will be described with reference to FIG. 9.

Since measuring probe 5 of the third exemplary embodiment has substantially the same configuration as that of measuring probe 5 of the first exemplary embodiment, the difference will be mainly described.

Similarly to the first exemplary embodiment, two steel balls 30 are disposed in air bearing 24 at substantially symmetrical positions from shaft center C of movable member 21, and magnet 31 is fixed to air bearing 24 below steel ball 30. However, unlike the first exemplary embodiment, the third exemplary embodiment has a mechanism in which non-magnetic body 70 is disposed between steel ball 30 and magnet 31 and the magnetic force of magnet 31 is adjusted by non-magnetic body 70. In other words, first non-magnetic body 70a is disposed between first supporter 30a and first magnet 31a. In addition, second non-magnetic body 70b is disposed between second supporter 30b and second magnet 31b. As described in the first exemplary embodiment, each of steel balls 30 rolls back and forth in the radial direction with respect to shaft center C of movable member 21 in accordance with the bending of elastic material 29. Here, in a case where a restoring force due to the magnetic force generated when steel ball 30 is away from the center of magnet 31 is stronger than the static frictional force that acts on elastic material 29 and steel ball 30, steel ball 30 cannot roll and the friction resistance is generated between elastic material 29 and steel ball 30 in accordance with the bending of elastic material 29. Furthermore, even in a case where steel ball 30 rolls on magnet 31, when the restoring force of the magnet is strong, there is also a case where a resistance against the vertical movement control of movable member 21 by the auto focus control is achieved. Therefore, it is necessary to adjust the magnetic force of magnet 31, but it is difficult to finely adjust the magnetic force of the magnet itself. Here, by disposing non-magnetic body 70 between magnet 31 and steel ball 30 and adjusting the thickness or the material of non-magnetic body 70, the magnetic force of magnet 31 can be finely adjusted, and the optimum magnetic force can be obtained for the auto focus control. In addition, by increasing the surface accuracy of the contact surface with steel ball 30 of non-magnetic body 70, effects similar to those illustrated in the second exemplary embodiment can be obtained in combination.

In addition, by appropriately combining any exemplary embodiment examples among the various embodiments described above, it is possible to achieve the effects of each exemplary embodiments. Further, it is possible to combine the embodiments with each other and to combine the features in the embodiment with each other.

As described above, the disclosure is intended to solve the problem of the related art, and it is intended to reduce a fine friction resistance when the movable member vertically moves and make the movable member vertically move more smoothly. Accordingly, it is possible to provide a shape measuring probe in which the distal end of the measuring probe comes into contact with the measuring surface with a constant force.

In other words, according to an aspect of the disclosure, two spherical supporters which are magnetic bodies are connected to each other with the magnetic force so as to be movable on two magnets, and the plate-like elastic material that adheres to the upper end portion of the movable member is placed on the two spherical supporters, suspended, and supported. With this configuration, in the three-dimensional shape measuring apparatus which performs the measurement by bringing the distal end of the measuring probe into contact with the measuring surface of the object, it is possible to maintain the force given to the measuring surface by the distal end of the measuring probe to be more constant than that in the related art. Furthermore, since the force is kept constant, the distal end of the measuring probe can come into contact with the measuring surface with a smaller force.

The measuring probe according to the above-described aspect of the disclosure can be applied not only to the three-dimensional shape measuring apparatus that measures the surface shape of a non-spherical surface object, such as an optical component or a mold, but also to the measuring probe, such as the shape measuring apparatus for measuring the flatness or the thickness of a thin plate material, such as a wafer for manufacturing semiconductors or a magnetic storage disk.

## Claims

1. A shape measuring probe (5) comprising:
a rod-like movable member (21) having a reflection surface (23) for reflecting laser light at an upper end;
a stylus (22) that is provided at a lower end of the movable member and comes into contact with an object;
an air bearing (24) that has a shaft hole (24a), allows the movable member to penetrate the shaft hole, and supports the movable member to be movable in a first direction;
a plate -like elastic material (29) that adheres to the upper end portion of the movable member (21) and is placed on a first supporter (30a) and a second supporter (30b), **characterized in that** it further comprises:
a first magnet (31a) and a second magnet (31b) that are fixed to an upper end portion of the air bearing, the first magnet and the second magnet being substantially symmetrical with respect to a shaft center of the movable member, and wherein the spherical first supporter (30a) is a magnetic body connected to the first magnet with a magnetic force so as to be movable on the first magnet; the spherical second supporter (30b) is a magnetic body connected to the second magnet with a magnetic force so as to be movable on the second magnet.

2. The shape measuring probe of Claim 1, wherein a first magnetic body (60a) is disposed between the first magnet and the first supporter, and the elastic material is supported by the first supporter via the first magnetic body with the magnetic force of the first magnet, and wherein a second magnetic body (60b) is disposed between the second magnet and the second supporter, and the elastic material is supported by the second supporter via the second magnetic body with the magnetic force of the second magnet.

3. The shape measuring probe of Claim 1,
wherein a first non-magnetic body (70a) is disposed between the first magnet and the first supporter, and the elastic material is supported by the first supporter via the first non-magnetic body with the magnetic force of the first magnet, and
wherein a second non-magnetic body (70b) is disposed between the second magnet and the second supporter, and the elastic material is supported by the second supporter via the second non-magnetic body with the magnetic force of the second magnet.

4. The shape measuring probe of any one of Claims 1 to 3,
wherein an upper end surface of the first magnet and an upper end surface of the second magnet are flat surfaces, and the first supporter and the second supporter are steel balls.

5. The shape measuring probe of Claim 1,
wherein the air bearing has a first recess (24b1) and a second recess, (24b2) wherein at least a part of the first supporter and the first magnet are disposed in the first recess, and
wherein at least a part of the second supporter and the second magnet are disposed in the second recess.

## Patentansprüche

1. Formmesssonde (5), die Folgendes umfasst:
ein stangenartiges bewegbares Element (21) mit einer Reflexionsfläche (23) zum Reflektieren von Laserlicht an einem oberen Ende;
einen Eingabestift (22), der an einem unteren Ende des bewegbaren Elements bereitgestellt ist und mit einem Objekt in Kontakt kommt;
ein Luftlager (24), das ein Wellenloch (24a) umfasst, es dem bewegbaren Element erlaubt, in das Wellenloch einzudringen, und das bewegbare Element stützt, um in eine erste Richtung bewegbar zu sein;
ein plattenartiges elastisches Material (29), das am oberen Endabschnitt des bewegbaren Elements (21) haftet und auf einem ersten Träger (30a) und einem zweiten Träger (30b) platziert ist, **dadurch gekennzeichnet, dass** sie ferner Folgendes umfasst:
einen ersten Magnet (31a) und einen zweiten Magnet (31b), die an einem oberen Endabschnitt des Luftlagers befestigt sind, wobei der erste Magnet und der zweite Magnet mit Bezug auf eine Wellenmitte des bewegbaren Elements im Wesentlichen symmetrisch sind und wobei
der kugelförmige erste Träger (30a) ein magnetischer Körper ist, der mit dem ersten Magnet mittels einer magnetischen Kraft verbunden ist, um auf dem ersten Magnet bewegbar zu sein;
der kugelförmige zweite Träger (30b) ein magnetischer Körper ist, der mit dem zweiten Magnet mittels einer magnetischen Kraft verbunden ist, um auf dem zweiten Magnet bewegbar zu sein.

2. Formmesssonde nach Anspruch 1,
wobei ein erster magnetischer Körper (60a) zwischen dem ersten Magnet und dem ersten Träger angeordnet ist und das elastische Material mittels der magnetischen Kraft des ersten Magneten via den ersten magnetischen Körper vom ersten Träger gestützt wird und
wobei ein zweiter magnetischer Körper (60b) zwischen dem zweiten Magnet und dem zweiten Träger angeordnet ist und das elastische Material mittels der magnetischen Kraft des zweiten Magneten via den zweiten magnetischen Körper vom zweiten Träger gestützt wird.

3. Formmesssonde nach Anspruch 1,
wobei ein erster unmagnetischer Körper (70a) zwischen dem ersten Magnet und dem ersten Träger angeordnet ist und das elastische Material mittels der magnetischen Kraft des ersten Magneten via den ersten unmagnetischen Körper vom ersten Träger gestützt wird und
wobei ein zweiter unmagnetischer Körper (70b) zwischen dem zweiten Magnet und dem zweiten Träger angeordnet ist und das elastische Material mittels der magnetischen Kraft des zweiten Magneten via den zweiten unmagnetischen Körper vom zweiten Träger gestützt wird.

4. Formmesssonde nach einem der Ansprüche 1 bis 3,
wobei eine obere Endfläche des ersten Magneten und eine obere Endfläche des zweiten Magneten ebene Flächen sind und der erste Träger und der zweite Träger Stahlkugeln sind.

5. Formmesssonde nach Anspruch 1,
wobei das Luftlager eine erste Ausnehmung (24b1) und eine zweite Ausnehmung (24b2) aufweist,
wobei mindestens ein Teil des ersten Trägers und des ersten Magneten in der ersten Ausnehmung angeordnet sind und
wobei mindestens ein Teil des zweiten Trägers und des zweiten Magneten in der zweiten Ausnehmung angeordnet sind.

## Revendications

1. Sonde de mesure de forme (5) comprenant :
un élément mobile de type tige (21) ayant une surface de réflexion (23) pour réfléchir une lumière laser à une extrémité supérieure ;
un stylet (22) qui est fourni à une extrémité inférieure de l'élément mobile et vient en contact avec un objet ;
un palier à air (24) qui possède un trou d'arbre (24a), permet à l'élément mobile de pénétrer dans le trou d'arbre, et porte l'élément mobile pour être mobile dans une première direction ;
un matériau élastique de type plaque (29) qui adhère à la partie d'extrémité supérieure de l'élément mobile (21) et est placé sur un premier organe de support (30a) et un second organe de support (30b), **caractérisée en ce qu'**elle comprend en outre :
un premier aimant (31a) et un second aimant (31b) qui sont fixés à une partie d'extrémité supérieure du palier à air, le premier aimant et le second aimant étant sensiblement symétriques par rapport à un centre d'arbre de l'élément mobile, et
dans laquelle le premier organe de support sphérique (30a) est un corps magnétique relié au premier aimant avec une force magnétique lui permettant d'être mobile sur le premier aimant ;
le second organe de support sphérique (30b) est un corps magnétique relié au second aimant avec une force magnétique lui permettant d'être mobile sur le second aimant.

2. Sonde de mesure de forme selon la revendication 1,
dans laquelle un premier corps magnétique (60a) est disposé entre le premier aimant et le premier organe de support, et le matériau élastique est porté par le premier organe de support via le premier corps magnétique avec la force magnétique du premier aimant, et
dans laquelle un second corps magnétique (60b) est disposé entre le second aimant et le second organe de support, et le matériau élastique est porté par le second organe de support via le second corps magnétique avec la force magnétique du second aimant.

3. Sonde de mesure de forme selon la revendication 1,
dans laquelle un premier corps non magnétique (70a) est disposé entre le premier aimant et le premier organe de support, et le matériau élastique est porté par le premier organe de support via le premier corps non magnétique avec la force magnétique du premier aimant, et
dans laquelle un second corps non magnétique (70b) est disposé entre le second aimant et le second organe de support, et le matériau élastique est porté par le second organe de support via le second corps non magnétique avec la force magnétique du second aimant.

4. Sonde de mesure de forme selon l'une quelconque des revendications 1 à 3,
dans laquelle une surface d'extrémité supérieure du premier aimant et une surface d'extrémité supérieure du second aimant sont des surfaces plates, et le premier organe de support et le second organe de support sont des billes d'acier.

5. Sonde de mesure de forme selon la revendication 1,
dans laquelle le palier à air possède un premier évidement (24bl) et un second évidement (24b2),
dans laquelle au moins une partie du premier organe de support et le premier aimant sont disposés dans le premier évidement, et
dans laquelle au moins une partie du second organe de support et le second aimant sont disposés dans le second évidement.
